# EUROPEAN PATENT SPECIFICATION

(11) **EP 3 593 684 B1**
(45) Date of publication and mention of the grant of the patent: **08.12.2021**
(21) Application number: 18183062.1
(22) Date of filing: 12.07.2018
(51) Int. Cl.: A47J 37/04, A47J 43/07

(54) **KITCHEN APPARATUS AND METHOD FOR CONTROLLING IT**
KÜCHENVORRICHTUNG UND VERFAHREN ZUR STEUERUNG EINER SOLCHEN VORRICHTUNG
APPAREIL DE CUISINE ET SON PROCÉDÉ DE COMMANDE

(43) Date of publication of application: 15.01.2020
(73) Proprietor: BSH Hausgeräte GmbH, 81739 München (DE)
(72) Inventor: Dorn, Thomas, 83549 Eiselfing (DE)

(56) References cited:
- WO-A1-2016/141293
- DE-A1-102014 112 115
- US-A1- 2014 137 044

## Description

The present invention is related to an electrically operable kitchen apparatus for cooking food, and also autonomous cooking devices, or similar devices. In particular, the present invention related to a method and apparatus for controlling a kitchen apparatus for cooking food.

For many types of home appliances it is important to have a user detection or recognition functionality, so than an appliance can recognize who is using it, in order to enable e.g. personalization and authorization features. For example, in a case of kitchen apparatus, and also autonomous cooking devices it is hereby possible to activate a user specific user profile, to get access to last used recipes or provide easy access to saved favorite recipes. Similarly, it also possible to increase the safety level, e.g. by restricting the use for children for hazardous equipment, such as an equipment which can heavy harm a user e.g. the equipment comprises a rotating blades or hot elements. It is also possible to restrict the use of the household appliance for certain persons or groups of persons, and/or to restrict the use of the household appliance during certain time periods. Typically, access to such kitchen appliances is controlled through the use of simple pass codes entered by way of touch pad or keyboard associated with the appliance. Also access to favorite recipes is arranged by inserting a numeric code under which is saved specific favorite recipe. Often the pass code is forgotten by the user or can be captured by snooping. Further, the user may inadvertently give the pass code to others who are not entitled to operate the kitchen appliance. Another aspect is that food preparation requires high levels of hygiene, because palms and fingers have a constant contact with ingredients therefore a control access means for said kitchen appliance should be easy clean to provide suitable level of hygiene. An input controlling device is a necessary hardware device for the autonomous cooking apparatus. There are numbers, characters, and various functional patterns are marked on the input operation interface. Hence, users can input data or operate many functions of the autonomous cooking apparatus by using the input operation interface.

The document DE102014112115 (A1) discloses a system with at least one electrical kitchen appliance for the processing of at least one food according to predetermined recipe data by a user and a memory connected with the electrical kitchen appliance, wherein the electrical kitchen appliance exhibits a food parameter acquisition device for acquiring at least one parameter of the food to be processed and/or an environmental parameter acquisition device for acquiring a parameter of an environmental condition of the electrical kitchen appliance, and at least one additional data item is stored in the memory for the acquired parameter. This provides the type of system with which the success of a recipe can be guaranteed within broad limits using the electrical kitchen appliance.

The document US7109445 discloses a cooking apparatus includes a cooking chamber and user interface, which includes a controller, display, and memory for storing recipes. The display is coupled to the controller and displays recipes. A method includes selectively displaying recipes and selecting a manual or recipe mode. In the manual mode, a heat setting and cooking time is selected. The selected cooking time is decremented in predetermined increments and the heating element is energized in accordance with the selected heat setting, after which the heating element is energized according to a keep warm setting for a predetermined time, following which it is deenergized. In the recipe mode, a main menu is displayed, from which the user selects a recipe category. A sub menu is displayed, from which the user selects a recipe identifier associated with the selected recipe category. A list of ingredients for the selected recipe identifier is then displayed. Thus, the cooking apparatus and method formed in accordance with the invention simplify the task of food preparation by enabling the user to selectively display recipes and their ingredients through a user-friendly interface, which eliminates the need to store and later refer to written recipe cards or books. The invention also integrates the task of cooking food with guidance for preparing the food and control of the cooking process.

The document US2014137044A1 discloses a programmable food cooking appliance having a display includes a control panel. One or more control buttons for controlling operation of the food cooking appliance are disposed on the control panel. One or more displays, each one of the two or more displays are disposed on the control panel adjacent a respective control button. A database stores two or more recipes. A processor communicates with the database and assigns a recipe to a respective one of each control button, and transmits a display signal to the display adjacent the respective one control button to display a description of the recipe associated with the respective one control button.

However, user usually needs to operate a number of keys or touch the touch panel several times to switch a few rows on the screen. That is inconvenient to operate an action requiring some steps, and particularly for the user using the kitchen apparatus for cooking foods.

In order to achieve the objective mentioned above, the present invention provides a kitchen apparatus for cooking foods according to claim 1.

In order to achieve the objective mentioned above, the present invention provides a method for controlling the kitchen apparatus for cooking food according to claim 4. The controlling method comprises: firstly, the method determines whether a fingerprint sensor is touched. Afterward, the method has a comparison stage whether the scanned fingerprint is consistent with a fingerprint pattern stored in a save data memory then if yes, access to run the kitchen apparatus is granted. The next step of the method comprises the direct access to data like favorite recipes stored in the save data memory. Favorite recipes stored in the save data memory are assigned to fingerprint pattern by user. The touch of the fingerprint sensor activates the controlling means for searching consistent the fingerprint pattern. Afterwards when the consistent fingerprint is found assigned recipes is activated. The recipes comprise a number of instruction with specific parameters according to which kitchen apparatus cooks food, namely instruction about duration, temperature, breaks, mixing, ingredients etc. to achieve specific dish. The recipes are stored in the save data memory by the producer of the kitchen apparatus for cooking foods or by the user. The user selects the favorite recipes and assigns them to specific fingerprint.

According to the invention the kitchen apparatus for cooking foods comprises the save data memory which has stored user's fingerprint patterns to compare them by the controlling unit with the fingerprint scanned by the fingerprint sensor for providing the access to run the kitchen apparatus, so the access to stored data doesn't require any additional peripherals to run the kitchen apparatus. Additionally, said access is granted by a single touch the fingerprint sensor by a suitable, defined previously user's finger.

According to the invention kitchen apparatus for cooking foods comprises the save data memory with stored users fingerprint patterns to compare them with scanned fingerprint by the fingerprint sensor by the controlling unit, and for providing the access to favorite recipes stored in the save data memory. Therefore access to favorite recipes is achieved by single touch the fingerprint sensor. There is possible to assign ten favorite recipes because of the number of fingers.

According to the invention the kitchen apparatus for cooking foods comprises the control panel having two fingerprint sensors and the controlling unit for analyzing if the first or second fingerprint sensor touched or both are touched for more than at least one second, to provide possibility to assign to fingerprint more than ten recipes which are directly available by user. Advantageously the kitchen apparatus for cooking foods in which the favorite recipe is assigned to single fingerprint pattern, or is assigned to combination of two fingerprint patterns. The number of a possible combination of the fingers scanned at the same time by two fingerprint sensors is much bigger than ten, as a result of the number of user fingers.

According to the invention the method for controlling the kitchen apparatus for cooking foods according wherein method comprises: firstly, the method determines whether the first fingerprint sensor or the second fingerprint sensor or both are touched for more than one second. Afterward, the method has a comparison stage to determine whether the scanned combination of the fingerprints is consistent with a combination of the fingerprint patterns stored in the save data memory, then if yes, access to run the kitchen apparatus for cooking foods is granted, the next step of the method comprises the direct access to the favorite recipes stored in the save data memory, the touch of the first fingerprint sensor or the second fingerprint or both, for more than one second, causes that fingerprints are scanned and the controlling unit is activated for searching stored in the save data memory consistent combination of the fingerprint patterns assigned to recipes. Finally when the consistent combination of the fingerprints is found then assigned recipe is activated.

A device operations sensors continuously measure the kitchen apparatus for cooking foods parameters as, food temperature, duration of the process, rotation speed of the mixing, blending device disposed in the coking utensil and send appropriate information to the controlling unit to control the course of the process.

A control means are manly used to input additional information, change the parameters of the process etc. The control means are realized for example as a buttons or the like, or as a part of the display with a touchscreen area.

It is to be understood that both the foregoing general description and the following detailed description are exemplary, and are intended to provide further explanation of the invention as claimed.

Further benefits and advantages of the present invention will become apparent after a careful reading of the detailed description with appropriate reference to the accompanying drawings.

In the drawings:
Fig. 1 is a front-side view of exemplary kitchen apparatus for cooking foods of the present invention.
Fig. 2 is a flowchart of controlling the kitchen apparatus for cooking.

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Typically devices that cooking foods stuff, also include kitchen devices what are known as kitchen apparatus for cooking comprises a base unit including a motor turning a drive mechanism, a heated receptacle to receive and heat food for mixing and cooking, releasable disposed on the base unit including a bottom portion, a recess and rotating blades placed therein and driven by the drive mechanism when the receptacle is in a working position on the base unit. A control panel is disposed on the base unit. Such devices can be provided with means which limit the access to device so than an device can recognize who is using it, in order to enable e.g. personalization and authorization features, exemplary to get access to favorite recipes. The recipes comprise a series of instruction for user related to the ingredients of the dish and instructions for the kitchen apparatus how to execute process of preparing, i.e. about temperature, duration, next steps of food processing etc.

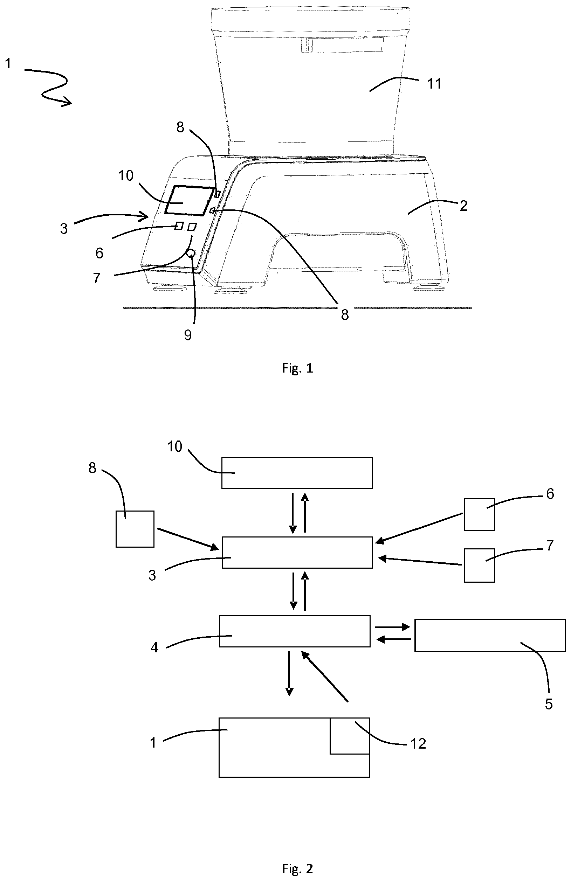

Referring to the Fig. 1 a kitchen apparatus for cooking foods 1 comprises a base unit 2 of approximately cuboid form, and approximately cylindrical a cooking utensil 11 releasable disposed on the upper surface of the base unit 2. On the front side of the base unit 2 is disposed a control panel 3 having a display 7. The cooking utensil 11 is heated by electric heater (not shown on this figure) and on its bottom portion has the mixing/blending means (not shown on this figure) driven by an electric motor (not shown on this figure) placed in the base unit. The kitchen apparatus for coking foods 1 comprises a controlling unit 4, and save data memory 5, and further comprises two fingerprint sensors 6, 7, for controlling access to run the kitchen apparatus for cooking foods 1, and for achieving access to data stored in the save data memory 5. Additionally, the control panel 3 has a control means 8 for setting additional function or parameters of the kitchen apparatus for cooking device 1 and a power switch 9, for its turn on or off. The cooking process is controlled by the control unit 4 cooperating with a device operation sensor 12 (not shown on this figure). Therefore the control unit 4 is constantly informed about the temperature, duration, rotation speed etc. for efficiently controlling the process of cooking foods.

Referring to Fig. 2 showing a flowchart of a method for controlling the kitchen apparatus for cooking, said method comprises: firstly the method determines whether the first fingerprint sensor 6 or the second fingerprint sensor 7, or both are touched for more than one second. Afterward, the method has a comparison stage determine whether the scanned combination of fingerprints are consistent with a combination of fingerprint patterns previously stored by user in the save data memory 5 then if yes, access to run the kitchen apparatus for cooking foods 1 is granted. The next step of the method comprises the direct access to the favorite recipes previously stored and assigned to combination of the fingerprints in the save data memory 5. The touch of the first fingerprint sensor 6 or the second fingerprint 7 or both for more than one second, causes that fingerprint are scanned and the controlling unit 4 is activated for searching stored in the save data memory 5, consistent combination of the fingerprint pattern assigned to recipes, afterwards when the consistent combination of the fingerprints is found then assigned recipe is activated and the kitchen apparatus is ready to execute activated recipe, consisting many steps and parameters for processing. The recipes has been previously stored in the save data memory by the producer of the kitchen apparatus for coking foods 1, and the user can assign the combination of fingerprints to specific, favorite recipe and save this in the save data memory 5. The arrows indicate of the information and instruction flows between elements.

Present invention provides a kitchen apparatus for cooking foods and method for controlling it. It makes possible to activate a device or activate a user specific profile or to get access to last used recipes or provide easy access to saved favorite recipes by simple using fingerprint. This a hygienic and very convenient for user solution.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

### List of reference signs:

- 1: Kitchen apparatus for cooking
- 2: Base unit
- 3: Control panel
- 4: Controlling unit
- 5: Save data memory
- 6: Fingerprint sensor, first fingerprint sensor
- 7: Second fingerprint sensor
- 8: Control means
- 9: Power switch
- 10: Display
- 11: Cooking utensil
- 12: Device operation sensors

## Claims

1. A kitchen apparatus for cooking foods (1) comprising a base unit (2), a cooking utensil (11) releasable disposed on the base unit (2), a control panel (3) with a display (10), disposed on the base unit (2) and a controlling unit (4) with save data memory (5), and the control panel (3) is provided with at least one a fingerprint sensor (6) for controlling access to run the kitchen apparatus for cooking foods (1), and for access to data stored in the save data memory (5), as users fingerprints patterns, **characterized in that** the control panel (3) is provided with two fingerprint sensors (6, 7), and the controlling unit (4) analyzing whether a first fingerprint sensor (6) is touched or a second fingerprint sensor (7) is touched, or both are touched, for more than at least one second, and to compare scanned fingerprints with stored in the save data memory (5) fingerprint patterns, for providing the access to run the kitchen apparatus for cooking foods (1).

2. Kitchen apparatus for cooking foods (1) according to claim 1 **characterized in that** every favorite recipe is assigned to single fingerprint pattern, or is assigned to combination of two fingerprint patterns scanned at the same time by the first fingerprint sensor (6) and the second fingerprint sensor (7), and saved in the save data memory (5).

3. Kitchen apparatus for cooking foods (1) according to claim 1 or 2 **characterized in that** the save data memory (5) has stored favorite recipes assigned to combination of two fingerprint patterns scanned by first fingerprint sensors (6, 7), and the controlling unit (4) analyzing whether the first fingerprint sensor (6) is touched or the second fingerprint sensor (7) is touched, or both are touched, for more than at least one second, and to compare scanned combination of fingerprints with stored in the save data memory (5) combination of fingerprint patterns, for providing the access to favorite recipes.

4. A method for controlling the kitchen apparatus for cooking foods (1), according to one of the previous claims, comprising a base unit (2), a cooking utensil (11) releasable disposed on the base unit (2), a control panel (3) with a display (10), disposed on the base unit (2) and a controlling unit (4) with save data memory (5) and the control panel (3) is provided with at least one a fingerprint sensor (6) for controlling access to run the kitchen apparatus for cooking foods (1), and for access to data stored in the save data memory (5), as users fingerprints patterns, **characterized in that** the controlling method comprises: firstly, the method determines whether the first fingerprint sensor (6) or the second fingerprint sensor (7) or both are touched for more than one second, afterward, the method has a comparison stage to determine whether the scanned combination of the fingerprints are consistent with a combination of the fingerprint patterns stored in the save data memory (5) then if yes, access to run the kitchen apparatus for cooking foods (1) is granted, the next step of the method comprises the direct access to the favorite recipes stored in the save data memory (5), in this stage the touch of the first fingerprint sensor (6) or the second fingerprint (7) or both for more than one second, causes that fingerprints are scanned and the controlling unit (4) is activated for searching stored in the save data memory (5), consistent combination of the fingerprint patterns assigned to recipes, finally when the consistent combination of the fingerprints is found then assigned recipe is activated.

## Patentansprüche

1. Küchenvorrichtung zum Garen von Lebensmitteln (1) mit einer Sockeleinheit (2), einem abnehmbar auf der Sockeleinheit (2) angeordneten Kochgeschirr (11), einem an der Sockeleinheit (2) angeordneten Bedienfeld (3) mit einer Anzeige (10) und einer Steuereinheit (4) mit einem Datenspeicher (5), wobei das Bedienfeld (3) mit mindestens einem Fingerabdrucksensor (6) zum Regeln des Zugriffs zur Benutzung der Küchenvorrichtung zum Garen von Lebensmitteln (1) und für den Zugriff auf als Fingerabdruckmuster von Benutzern in dem Datenspeicher (5) gespeicherte Daten versehen ist, **dadurch gekennzeichnet, dass** das Bedienfeld (3) mit zwei Fingerabdrucksensoren (6, 7) versehen ist und die Steuereinheit (4) analysiert, ob ein erster Fingerabdrucksensor (6) oder ein zweiter Fingerabdrucksensor (7) oder beide für mehr als mindestens eine Sekunde berührt werden, und zum Gewähren des Zugriffs zur Benutzung der Küchenvorrichtung zum Garen von Lebensmitteln (1) abgenommene Fingerabdrücke mit in dem Datenspeicher (5) gespeicherten Fingerabdruckmustern vergleicht.

2. Küchenvorrichtung zum Garen von Lebensmitteln (1) nach Anspruch 1, **dadurch gekennzeichnet, dass** jedes Lieblingsrezept einem einzelnen Fingerabdruckmuster oder einer Kombination aus zwei gleichzeitig von dem ersten Fingerabdrucksensor (6) und dem zweiten Fingerabdrucksensor (7) abgenommenen Fingerabdruckmustern zugeordnet und in dem Datenspeicher (5) gespeichert ist.

3. Küchenvorrichtung zum Garen von Lebensmitteln (1) nach Anspruch 1 oder 2, **dadurch gekennzeichnet, dass** in dem Datenspeicher (5) Lieblingsrezepte gespeichert sind, die einer Kombination aus zwei von ersten Fingerabdrucksensoren (6, 7) abgenommenen Fingerabdruckmustern zugeordnet sind, und die Steuereinheit (4) analysiert, ob der erste Fingerabdrucksensor (6) oder der zweite Fingerabdrucksensor (7) oder beide für mehr als mindestens eine Sekunde berührt werden, und zum Gewähren des Zugriffs auf Lieblingsrezepte eine abgenommene Kombination von Fingerabdrücken mit einer in dem Datenspeicher (5) gespeicherten Kombination von Fingerabdruckmustern vergleicht.

4. Verfahren zum Steuern der Küchenvorrichtung zum Garen von Lebensmitteln (1) nach einem der vorhergehenden Ansprüche mit einer Sockeleinheit (2), einem abnehmbar auf der Sockeleinheit (2) angeordneten Kochgeschirr (11), einem an der Sockeleinheit (2) angeordneten Bedienfeld (3) mit einer Anzeige (10) und einer Steuereinheit (4) mit einem Datenspeicher (5), wobei das Bedienfeld (3) mit mindestens einem Fingerabdrucksensor (6) zum Regeln des Zugriffs zur Benutzung der Küchenvorrichtung zum Garen von Lebensmitteln (1) und für den Zugriff auf als Fingerabdruckmuster von Benutzern in dem Datenspeicher (5) gespeicherte Daten versehen ist, **dadurch gekennzeichnet, dass** das Steuerverfahren Folgendes umfasst: zunächst wird mit dem Verfahren ermittelt, ob der erste Fingerabdrucksensor (6) oder der zweite Fingerabdrucksensor (7) oder beide für mehr als eine Sekunde berührt werden, danach umfasst das Verfahren eine Vergleichsphase zum Ermitteln, ob die abgenommene Kombination der Fingerabdrücke mit einer Kombination der in dem Datenspeicher (5) gespeicherten Fingerabdruckmuster übereinstimmt, ist dies der Fall, wird Zugriff zur Benutzung der Küchenvorrichtung zum Garen von Lebensmitteln (1) gewährt, der nächste Schritt in dem Verfahren umfasst den direkten Zugriff auf die in dem Datenspeicher (5) gespeicherten Lieblingsrezepte, in dieser Phase wird durch Berühren des ersten Fingerabdrucksensors (6) oder des zweiten Fingerabdrucksensors (7) oder beider für mehr als mindestens eine Sekunde ein Abnehmen der Fingerabdrücke bewirkt, und die Steuereinheit (4) wird aktiviert und sucht eine in dem Datenspeicher (5) gespeicherte übereinstimmende Kombination der Fingerabdruckmuster, die Rezepten zugeordnet ist, und wenn die übereinstimmende Kombination der Fingerabdrücke gefunden wird, wird schließlich das zugeordnete Rezept aktiviert.

## Revendications

1. Appareil de cuisine pour cuire des aliments (1), comprenant une unité de base (2), un ustensile de cuisson (11) amovible disposé sur l'unité de base (2), un panneau de commande (3) avec un écran (10), disposé sur l'unité de base (2) et une unité de commande (4) avec mémoire d'enregistrement de données (5), et le panneau de commande (3) est doté d'au moins un capteur d'empreinte digitale (6) afin de contrôler l'activation de l'appareil de cuisine pour cuire des aliments (1) et afin d'accéder aux données enregistrées dans la mémoire d'enregistrement de données (5), sous la forme de schémas d'empreintes digitales d'utilisateurs, **caractérisé en ce que** le panneau de commande (3) est doté de deux capteurs d'empreinte digitale (6, 7) et l'unité de commande (4) analyse si un premier capteur d'empreinte digitale (6) est touché, si un deuxième capteur d'empreinte digitale (7) est touché ou si les deux sont touchés, durant plus d'au moins une seconde, et afin de comparer les empreintes digitales numérisées aux schémas d'empreintes digitales enregistrés dans la mémoire d'enregistrement de données (5), afin de permettre l'activation de l'appareil de cuisine pour cuire des aliments (1).

2. Appareil de cuisine pour cuire des aliments (1) selon la revendication 1 **caractérisé en ce que** chaque recette préférée est affectée à un schéma d'empreintes digitales unique ou est affectée à une combinaison de deux schémas d'empreintes digitales numérisés en même temps par le premier capteur d'empreinte digitale (6) et le deuxième capteur d'empreinte digitale (7), et enregistrés dans la mémoire d'enregistrement de données (5).

3. Appareil de cuisine pour cuire des aliments (1) selon la revendication 1 ou 2 **caractérisé en ce que** la mémoire d'enregistrement de données (5) possède des recettes préférées enregistrées affectées à la combinaison de deux schémas d'empreintes digitales numérisés par les premiers capteurs d'empreintes digitales (6, 7), et l'unité de commande (4) analyse si le premier capteur d'empreinte digitale (6) est touché, si le deuxième capteur d'empreinte digitale (7) est touché ou si les deux sont touchés, durant plus d'au moins une seconde, et afin de comparer la combinaison d'empreintes digitales numérisées à la combinaison de schémas d'empreintes digitales enregistrée dans la mémoire d'enregistrement de données (5), pour autoriser l'accès aux recettes préférées.

4. Procédé pour commander l'appareil de cuisine pour cuire des aliments (1), selon l'une des revendications précédentes, comprenant une unité de base (2), un ustensile de cuisson (11) amovible disposé sur l'unité de base (2), un panneau de commande (3) avec un écran (10), disposé sur l'unité de base (2) et une unité de commande (4) avec mémoire d'enregistrement de données (5), et le panneau de commande (3) est doté d'au moins un capteur d'empreinte digitale (6) pour contrôler l'activation de l'appareil de cuisine afin de cuire des aliments (1) et pour accéder aux données enregistrées dans la mémoire d'enregistrement de données (5), sous la forme de schémas d'empreintes digitales d'utilisateurs, **caractérisé en ce que** le procédé de commande comprend : premièrement, le procédé détermine si le premier capteur d'empreinte digitale (6), le deuxième capteur d'empreinte digitale (7) ou les deux est/sont touché(s) durant plus d'une seconde, ensuite le procédé comporte une étape de comparaison afin d'établir si la combinaison d'empreintes digitales numérisées correspond à une combinaison des schémas d'empreintes digitales enregistrés dans la mémoire d'enregistrement de données (5) et si oui, l'activation de l'appareil de cuisine pour cuire des aliments (1) est accordée, la prochaine étape du procédé comprend l'accès direct aux recettes préférées enregistrées dans la mémoire d'enregistrement de données (5), à cette étape, le fait de toucher le premier capteur d'empreintes digitales (6), le deuxième capteur d'empreintes digitales (7) ou les deux durant plus d'une seconde fait que les empreintes digitales sont numérisées et l'unité de commande (4) est activée afin de parcourir le contenu de la mémoire d'enregistrement de données (5), en correspondance avec la combinaison des schémas d'empreintes digitales affectée aux recettes et finalement, lorsque la combinaison d'empreintes digitales correspondante est trouvée, la recette affectée est activée.
